# FASCICULE DE BREVET EUROPEEN

(11) **EP 1 353 883 B1**
(45) Date de publication et mention de la délivrance du brevet: **28.07.2004**
(21) Numéro de dépôt: 01995744.8
(22) Date de dépôt: 19.12.2001
(51) Int. Cl.: C03C 25/40

(54) **FIS DE VERRE ENSIMES, COMPOSITION D'ENSIMAGE ET COMPOSITES COMPRENANT LESDITS FILS**
GESCHLICHTETE GLASGARNE, SCHLICHTEZUSAMMENSETZUNGEN UND DIE GARNE ENTHALTENDE VERBUNDWERKSTOFFE
SIZED GLASS YARNS, SIZING COMPOSITION AND COMPOSITES COMPRISING SAID YARNS

(30) Priorité: 24.01.2001 FR 0100910
(43) Date de publication de la demande: 22.10.2003
(73) Titulaire: Saint-Gobain Vetrotex France S.A., 73000 Chambéry (FR)
(72) Inventeur: GONTHIER, Michel, F-73000 Jacob-Bellecombette (FR)
(74) Mandataire: Muller, René
(86) Numéro de dépôt international: PCT/FR2001/004066
(87) Numéro de publication internationale: WO 2002/059055

(56) Documents cités:
- WO-A-94/11318
- DE-A- 1 694 008
- US-A- 4 689 085

## Description

L'invention concerne des fils de verre revêtus d'une composition d'ensimage destinés à renforcer des matières organiques du type polymère, les compositions d'ensimage utilisées pour revêtir ces fils et les composites renfermant ces fils.

Les fils de verre utilisés pour le renforcement en général sont produits industriellement à partir de filets de verre fondu s'écoulant des multiples orifices d'une filière. Ces filets sont étirés mécaniquement sous la forme de filaments continus, puis sont rassemblés en fils de base qui sont ensuite collectés, par exemple par bobinage sur un support en rotation. Avant leur rassemblement, les filaments sont revêtus d'une composition d'ensimage par passage sur un dispositif adapté tel que des rouleaux d'enduction.

La composition d'ensimage s'avère essentielle à plusieurs titres. Tout d'abord, elle intervient lors de la fabrication des fils en protégeant les filaments de verre de l'abrasion qui se produit lorsque ces derniers frottent à grande vitesse sur les organes servant à les guider et à les collecter. Ensuite, la composition d'ensimage permet de donner de la cohésion au fil en créant des liaisons entre les filaments qui le constituent. Le fil étant ainsi rendu plus intègre, sa manipulation s'en trouve facilitée. Enfin, la composition d'ensimage favorise le mouillage et l'imprégnation des fils de verre par le polymère à renforcer, qui à ce stade a l'aspect d'une résine fluide. Les propriétés mécaniques du composite final sont de ce fait nettement améliorées.

Les matières à renforcer peuvent intégrer les fils de verre sous différentes formes : fils continus ou coupés, tissus, mats de fils continus ou coupés, .....

Les composites incorporant des fils de verre coupés peuvent être obtenus, entre autres, par la technique de "moulage au contact" qui consiste à enduire l'intérieur d'un moule ouvert, sans contre-moule, avec de la résine à renforcer et des fils de verre de longueur variable. Dans le procédé particulier de "moulage par projection simultanée", la résine et les fils de verre coupés sont projetés ensemble sur les parois internes du moule au moyen d'un "pistolet" comprenant un coupeur apte à sectionner les fils extraits d'un ou plusieurs enroulements, en général sous forme de stratifils, et un dispositif pour l'alimentation en résine, par exemple une pompe pneumatique. Ce procédé, simple et modulable à la fois au regard de la taille et de la forme, est particulièrement adapté à la fabrication de pièces à l'unité ou en petite série à base de polymère thermodurcissable de la famille des polyesters ou des époxydes.

La qualité des composites obtenus par ce procédé dépend largement des propriétés apportées par les fils de verre, et donc de l'ensimage qui les revêt. Notamment, on recherche des compositions d'ensimage qui peuvent être facilement mouillées ou imprégnées en surface par la résine, c'est-à-dire qui sont aptes à assurer un contact étroit entre les fils et la résine, de sorte que l'on puisse obtenir les propriétés mécaniques de renforcement attendues.

Il est également souhaité que ces compositions permettent une mise en oeuvre rapide, en particulier que le mélange fils/résine qui est projeté sur le moule sous la forme de bandes chevauchantes puisse s'étaler uniformément, et que l'étape subséquente de roulage destinée à éliminer les bulles d'air et à assurer une meilleure répartition des fils dans la résine soit de courte durée.

Mais par ailleurs, il est nécessaire que la composition d'ensimage ait une certaine "incompatibilité" avec la résine c'est-à-dire ne soit pas trop soluble dans la résine, ceci afin d'éviter que le mélange fils/résine après projection sur une paroi verticale ne "s'effondre" par simple gravité.

Il est tout aussi nécessaire que les fils coupés conservent leur intégrité et ne s'ouvrent pas en libérant les filaments qui les constituent aussi bien pendant la projection qu'au cours du roulage/ébullage.

On voit donc que de telles compositions sont difficiles à mettre au point car les propriétés visées sont rarement compatibles les unes avec les autres, et qu'il est de ce fait nécessaire de réaliser des compromis.

Un des problèmes rencontrés lors de la mise en oeuvre du procédé de moulage par projection simultanée réside dans la trop faible durée de vie des lames dont est équipé le pistolet de projection. Bien qu'étant en acier dur, les lames du coupeur ont tendance à s'user rapidement au contact du verre, ce qui provoque des "fausses coupes" et l'apparition de fils coupés de longueur supérieure à la longueur voulue. Selon le nombre de lames, leur degré d'usure et la position qu'elles occupent sur le coupeur, on peut obtenir un mélange de fils de longueur correspondant à un multiple entier de la longueur attendue. Il résulte des fausses coupes une irrégularité du tapis de fibre projetée qui nuit à la qualité de la pièce moulée et oblige à interrompre la fabrication pour effectuer le changement des lames usagées d'où une baisse de la productivité.

Des fils de verre adaptés à la production de pièces par moulage par projection simultanée sont notamment décrits dans FR-A-2 755 127. Ces fils sont revêtus d'une composition qui comprend, outre les agents collants aptes à assurer la fonction d'ensimage, l'association d'un aminosilane et d'un silane insaturé. Bien que présentée comme améliorant l'aptitude du fil à être coupé, l'association des deux silanes précités ne permet pas d'atteindre l'objectif visé, à savoir que la longévité des lames est insuffisante pour répondre aux standards de productivité actuels qui requièrent de pouvoir opérer de manière continue pendant environ une dizaine d'heures.

L'invention a pour but de mettre au point des fils de verre revêtus d'une composition d'ensimage qui soit particulièrement adaptée au procédé de moulage par projection simultanée, et qui permette d'augmenter la durée de vie des lames du coupeur sans toutefois modifier les conditions de mise en oeuvre, et sans affecter les autres propriétés des fils, notamment leur aptitude à être imprégnés par la résine. Comme cela a été indiqué précédemment, il est en effet essentiel que les fils puissent être imprégnés rapidement par la résine car il n'y a pas ici de mélange préalable des fils et de la résine avant l'étape de projection.

La présente invention a donc pour objet des fils de verre revêtus d'une composition d'ensimage, essentiellement aqueuse, qui est caractérisée en ce qu'elle comprend l'association
- d'au moins un bis-silane (A) de formule 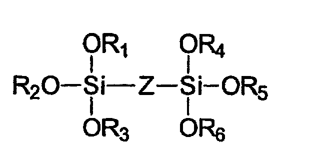 dans laquelle:
   R₁, R₂, R₃, R₄, R₅ et R₆, identiques ou différents, représentent un radical alkyle en C₁- C₆, de préférence en C₁- C₃
   Z représente une chaîne hydrocarbonée en C₁-C₁₆ pouvant contenir un ou plusieurs hétéroatomes N, O et/ou S
- et d'au moins un monosilane insaturé (B) choisi parmi les vinylsilanes et les (méth)acrylosilanes.

Dans la présente invention, par "fils de verre revêtus d'une composition d'ensimage" on entend des fils de verre "qui ont été revêtus d'une composition d'ensimage qui comprend ...", c'est-à-dire non seulement les fils de verre revêtus de la composition en question tels qu'obtenus à la sortie immédiate de l'(des) organe(s) d'ensimage, mais aussi ces mêmes fils après qu'ils ont subi un ou plusieurs autres traitements, par exemple une (des) étape(s) de séchage, en vue d'éliminer le solvant de la composition, et/ou de polymérisation/réticulation de certains constituants de ladite composition.

Toujours dans le contexte de l'invention, par "fils" il faut entendre les fils de base issus du rassemblement sous la filière d'une multitude de filaments, et les produits dérivés de ces fils, notamment les assemblages de ces fils de base en stratifils. De tels assemblages peuvent être obtenus en dévidant simultanément plusieurs enroulements de fils de base, puis en les rassemblant en mèches qui sont bobinées sur un support en rotation. Ce peut être également des stratifils "directs" de titre (ou masse linéique) équivalent à celui des stratifils assemblés, obtenus par le rassemblement de filaments, directement sous la filière, et l'enroulement sur un support en rotation.

Encore selon l'invention, par "composition d'ensimage essentiellement aqueuse", on entend une composition qui contient au moins 90 % en poids d'eau, de préférence au moins 93 %, et mieux encore au moins 94 %, au moins un agent collant et au moins un lubrifiant.

Selon un mode de réalisation préféré de l'invention, les fils de verres sont revêtus d'une composition d'ensimage dont le bis-silane (A) répond à la formule 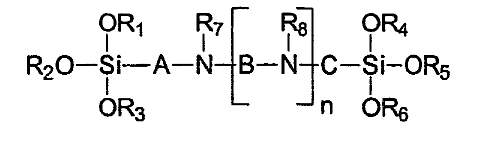 dans laquelle
R₁, R₂, R₃, R₄, R₅ et R₆ ont la signification donnée ci-avant,
A, B et C, identiques ou différents, représentent une chaîne hydrocarbonée en C₁-C₁₆, la somme des atomes de carbone de A, B et C étant inférieure ou égale à16
n est égal à 0, 1, 2 ou 3
R₇ et R₈, identiques ou différents, représentent H ou un radical méthyle ou éthyle.

De préférence, la composition d'ensimage comprend le bis-silane (A) de formule précitée dans laquelle
R₁, R₂, R₃, R₄, R₅ et R₆, identiques, représentent un radical méthyle ou éthyle
A et C, identiques ou différents, représentent un radical méthylène, éthylène ou propylène
B représente un radical éthylène
n est égal à 0 ou 1
R₇ et R₈ représentent un atome d'hydrogène.

De manière particulièrement préférée, le bis-silane (A) répond à la formule précédente dans laquelle
R₁, R₂, R₃, R₄, R₅ et R₆, identiques, représentent un radical méthyle
A et C représentent un radical propylène
n est égal à 0
R₇ et R₈ représentent un atome d'hydrogène.

Selon un autre mode de réalisation de l'invention, les fils de verre sont revêtus d'une composition d'ensimage dont le monosilane insaturé (B) est choisi parmi les (méth)acrylosilanes.

L'association du bis-silane (A) et du monosilane insaturé (B) s'avère avantageuse pour former des fils de verre présentant une aptitude améliorée à la coupe. Il a été constaté que le bis-silane (A) est un agent de fragilisation du verre très performant : une solution aqueuse très diluée de ce bis-silane, de l'ordre de 0,01 % en poids, suffit à obtenir l'effet recherché. Il semble que l'effet de fragilisation soit lié à la forte affinité du bis-silane pour le verre : on explique cela par la formation de liaisons relativement fortes entre les atomes de silicium portés par le bis-silane et l'oxygène des groupes hydroxyles libres du verre, lesquelles liaisons induisent une fragilisation du verre en surface. En introduisant dans la composition le monosilane (B) qui agit comme un agent "protecteur" s'opposant à l'action de coupure du bis-silane (A), il est possible d'ajuster l'aptitude du fil à être coupé. De manière générale, on obtient des résultats tout à fait satisfaisants avec un rapport pondéral bis-silane (A)/monosilane (B) compris entre 0,1 et 6, de préférence 0,3 et 3, et mieux encore 0,6 et 2.

A titre d'exemples de monosilanes (B) préférés, on peut citer
- pour les vinylsilanes : les vinyltrialkoxysilanes, en particulier le vinyltriéthoxysilane et le vinyltri(méthoxyéthoxy)silane,
- pour les (méth)acrylosilanes : les [(méth)acryloxyalkyl]trialkoxysilanes, en particulier le (méthacryloxypropyl)triéthoxysilane, et les (méth)acrylamidealkyltrialkoxysilanes, en particulier le méthacrylamidepropyltrialkoxysilane. Les (méth)acrylamidealkyltrialkoxysilanes sont particulièrement préférés.

Les fils de verre revêtus d'une composition d'ensimage associant l'amino-bis(propyl-triméthoxysilane) et le méthacrylamidepropyltrialkoxysilane se sont avérés particulièrement intéressants pour l'application visée de moulage par projection simultanée.

Conformément à la définition donnée précédemment, la composition d'ensimage revêtant les fils de verre comprend au moins un agent collant. Cet agent collant est généralement choisi parmi les homopolymères ou les copolymères à base d'acétate de vinyle, les polyuréthanes, les époxy et les polyesters.

A titre d'exemple d'homopolymères d'acétate de vinyle, on peut citer les poly(acétate de vinyle) ayant une faible masse moléculaire, c'est-à-dire inférieure ou égale à 60000, de préférence comprise entre 40000 et 60000, et mieux encore de l'ordre de 50000.

A titre d'exemple de copolymères à base d'acétate de vinyle, on peut citer les copolymères d'acétate de vinyle et d'au moins un autre monomère susceptible de copolymériser avec ce dernier, tels qu'un monomère insaturé, en particulier l'éthylène et le N-méthylolacrylamide, ou un monomère renfermant une fonction époxyde.

A titre d'exemple de polyuréthanes, on peut citer les composés obtenus par réaction d'au moins un polyisocyanate et d'au moins un polyol. On préfère les polyuréthanes issus de polyols à chaîne aliphatique et/ou cycloaliphatique.

A titre d'exemple d'époxy, on peut citer les composés présentant un indice d'époxyde inférieur à 450, de préférence supérieur à 180, notamment résultant de la réaction de bisphénol A et d'épichlorhydrine, sous forme d'émulsion aqueuse, ou modifiés pour les rendre solubles dans l'eau.

A titre d'exemple de polyesters, on peut citer les polyesters saturés ou faiblement insaturés. Ces polyesters sont généralement utilisés sous la forme d'une émulsion aqueuse.

De manière avantageuse, la composition comprend l'association d'au moins deux agents collants dont l'un au moins est un poly(acétate de vinyle) ou un polyuréthane. De préférence, on choisit d'associer un poly(acétate de vinyle) ou un polyuréthane et un copolymère à base d'acétate de vinyle, ou un poly(acétate de vinyle) et un polyuréthane. De manière particulièrement préférée, on associe un poly(acétate de vinyle) et un copolymère acétate de vinyle-N-méthylolacrylamide, un polyuréthane et un copolymère acétate de vinyle-époxyde ou éthylène-acétate de vinyle (EVA), et un polyuréthane et un poly(acétate de vinyle).

On peut en outre introduire dans la composition d'ensimage un agent plastifiant qui a pour fonction d'assouplir les chaînes polymériques constituant l'(les)agent(s) collant(s), notamment lorsqu'il s'agit d'homopolymères ou du copolymère acétate de vinyle-N-méthylolacrylamide. L'agent plastifiant permet d'abaisser la température de transition vitreuse (Tg) des agents collants ce qui améliore la "conformabilité" du mélange de fils coupés et de résine, c'est-à-dire la faculté à épouser la forme du moule, et de ce fait s'avère particulièrement intéressant lorsque la forme est complexe. En général, on choisit l'agent plastifiant parmi les dérivés du glycol tels que les dibenzoates d'alkylèneglycol, et de préférence les dibenzoates d'étylène et/ou de propylène glycol.

La quantité d'agent plastifiant dans la composition d'ensimage dépend bien évidemment du degré de souplesse que l'on souhaite conférer au fil, étant entendu que le fil doit cependant être suffisamment rigide pour lui permettre de se répartir correctement au sein de la résine. Lorsqu'on utilise un ou plusieurs homopolymères d'acétate de vinyle, associé ou non au copolymère acétate de vinyle-N-méthylolacrylamide, cette quantité est telle que rapport pondéral de l'agent plastifiant à la somme des homopolymères et du copolymère acétate de vinyle vinyle-N-méthylolacrylamide est compris entre 0,05 et 0,2 de préférence 0,10 et 0,15 exprimé en matières sèches.

La composition peut également comprendre au moins un agent lubrifiant et/ou antistatique dont le rôle consiste notamment à protéger les fils de l'abrasion mécanique lors de leur fabrication. En général, cet agent est choisi parmi les composés cationiques du type polyalkylèneimide, et les composés non ioniques du type esters d'acides gras et de poly(alkylèneglycols) poly(oxyalkylène) tel que le monolaurate de polyéthylèneglycol ou du type amides gras et de poly(oxyalkylène) tel que les amides de suif hydrogéné et de polyoxyéthylène.

Les fils de verre revêtus de la composition d'ensimage conformes à l'invention présentent une perte au feu inférieure à 1,5 %, de préférence comprise entre 0,9 et 1,3 %.

Le plus souvent, les fils de verre conformes à l'invention se présentent sous la forme d'enroulements de fils de base que l'on soumet à un traitement thermique. Ce traitement est destiné essentiellement à éliminer l'eau apportée par la composition d'ensimage, et, le cas échéant d'accélérer la réticulation des agents collants. Les conditions du traitement des enroulements peuvent varier selon la masse de l'enroulement. En général, le séchage est réalisé à une température de l'ordre de 110 à 140°C pendant plusieurs heures, de préférence 12 à 18 heures.

Comme cela a déjà été dit, les fils de base ainsi obtenus sont généralement extraits de l'enroulement et réunis avec plusieurs autres fils de base en une mèche qui est ensuite enroulée sur un support rotatif pour former un stratifil. De manière inattendue, il a été constaté que l'application d'une composition renfermant un agent antistatique cationique du type sel d'ammonium quaternaire sur les fils permet de renforcer l'aptitude des fils à être coupés. Ainsi, en déposant la composition précitée sur les fils de base, après extraction de l'enroulement et rassemblement pour former la mèche, on améliore notablement la durée de vie des lames. De préférence, on revêt les fils d'une composition aqueuse contenant 20 à 35 %, et de préférence de l'ordre de 25 % en poids de chlorure de cocotriméthylammonium.

Les fils revêtus de la composition d'ensimage selon l'invention, le cas échéant de la composition décrite au paragraphe précédent, peuvent être constitués de verre de toute nature pour autant qu'il soit apte au fibrage, par exemple en verre E, C, AR, et préférentiellement en verre E.

Ces mêmes fils sont constitués de filaments dont le diamètre peut varier dans une large mesure, par exemple de 9 à 24 µm, et de préférence 10 à 15 µm, et mieux encore 11 à 13 µm.

De manière avantageuse, les fils ont un titre compris entre 40 et 70 tex, et mieux encore de l'ordre de 57 tex. De ce fait, même lorsqu'on utilise des filaments de diamètre relativement élevé, le fil conserve une rigidité acceptable et reste apte à épouser parfaitement la forme du moule. En outre, les fils de verre coupés se répartissent de façon régulière et homogène au sein de la résine lors de la projection simultanée ce qui permet d'avoir un excellent renforcement.

Un autre objet de l'invention concerne la composition d'ensimage apte à revêtir lesdits fils de verre, laquelle composition est caractérisée en ce qu'elle comprend :
- au moins un bis-silane (A) répondant à la formule citée ci-avant
- au moins un monosilane (B)
- au moins un agent collant
- au moins un agent lubrifiant
- et de l'eau.

De préférence, la composition d'ensimage comprend :
- 0,05 à 0,4 % en poids de bis-silane (A)
- 0,05 à 0,4 % en poids de monosilane (B)
- 3,9 à 6,8 % en poids d'agent collant
- 0,01 à 0,4 % en poids d'agent lubrifiant,
- et au moins 90 % d'eau.

De préférence, la composition d'ensimage comprend au moins 93 % en poids d'eau et mieux encore au moins 94 %.

Il est possible d'introduire d'autres silanes dans la composition d'ensimage. Dans ce cas, la teneur totale en silanes n'excède pas 1 % en poids de la composition, de préférence 0,8 %.

L'extrait sec de la composition d'ensimage est généralement compris entre 2 et 10 % , de préférence 4 et 8 %, et avantageusement de l'ordre de 6 %.

Un objet de l'invention concerne encore les composites comprenant les fils de verre revêtus de la composition d'ensimage. De tels composites comprennent au moins une matière polymère thermodurcissable, de préférence un polyester et/ou un époxy, et des fils de verre dont tout ou partie est constituée de fils de verre conformes à l'invention. Le taux de verre au sein du composite est généralement compris entre 20 et 40 % en poids, et de préférence entre 25 et 35 %. En plus de leur aptitude à la coupe améliorée, les fils de verre selon l'invention sont remarquables en ce qu'ils permettent à la matière qu'ils renforcent d'avoir un meilleur comportement au vieillissement. Ceci se traduit notamment par une résistance plus importante à la contrainte en flexion et au cisaillement comme indiqué par la suite dans les exemples de réalisation qui suivent, lesquels sont destinés à illustrer l'invention, sans toutefois la limiter.

### EXEMPLE 1 (COMPARATIF)

On prépare une composition d'ensimage comprenant (en % en poids) :
- diaminosilane ⁽¹⁾ 0,30
- vinyltriéthoxysilane⁽²⁾ 0,30
- agent collant : poly(acétate de vinyle)⁽³⁾ (PM 50 000) 7,75
- agent collant : copolymère d'acétate de vinyle et de N-méthylolacrylamide⁽⁴⁾ 3,00
- plastifiant : mélange de dibenzoate de diéthylène glycol et de dibenzoate de propylène glycol⁽⁵⁾ (rapport pondéral 50:50) 0,70
- lubrifiant non ionique : monolaurate de polyéthylène glycol 400⁽⁶⁾ 0,30
- lubrifiant : polyéthylène imide à fonctions amide libres⁽⁷⁾ 0,05
- Eau qsp 100
- Acide formique qsp pour obtenir un pH égal à 4.

(1) commercialisé sous la référence «Silquest® A-1126» par la société WITCO
(2) commercialisé sous la référence «Silquest® A-151 » par la société WITCO
(3) commercialisé sous la référence «Vinamul®8852» par la société VINAMUL
(4) commercialisé sous la référence «Vinamul®8828» par la société VINAMUL
(5) commercialisé sous la référence «K-Flex® 500» par la société AKZO CHEMICAL
(6) commercialisé sous la référence «Nopalcol® 4L» par la société HENKEL CORPORATION
(7) commercialisé sous la référence «Emery® 6717» par la société HENKEL CORPORATION

La préparation de 3600 litres de la composition d'ensimage est réalisée de la manière suivante :

Dans un premier récipient contenant une solution constituée de 1800 I d'eau et 1,5 kg d'acide formique (80 % en volume), on introduit l'aminosilane, puis 20 minutes plus tard le vinyltriéthoxysilane. Le cas échéant, le pH de la solution est ajusté à environ 4,5 par ajout d'acide formique.

Dans un deuxième récipient, on introduit successivement les deux agents collants et on dilue à environ 400 litres avec de l'eau, sous agitation, et on ajoute le plastifiant et le lubrifiant non ionique⁽⁶⁾. On laisse le mélange sous agitation pendant au moins 15 minutes et on dilue avec de l'eau jusqu'à 1000 litres.

Grâce à l'association du plastifiant et du lubrifiant non ionique, cette étape dite "de plastification" est courte.

Dans un troisième récipient, on introduit le lubrifiant⁽⁷⁾ que l'on dilue à 10-20 fois son poids avec de l'eau.

Dans le premier récipient, on introduit le mélange plastifié du deuxième récipient et le lubrifiant du troisième récipient et on complète avec de l'eau jusqu'à l'obtention d'un volume de 3600 I. Si nécessaire, le pH de la composition d'ensimage ainsi obtenue est ajusté à environ 4 par ajout d'acide formique. L'extrait sec de cette composition est égal à 7 %.

La composition d'ensimage ainsi obtenue est utilisée pour revêtir, de manière connue, des filaments de verre E d'environ 12 µm de diamètre étirés à partir de filets de verre fondu s'écoulant des 2400 orifices d'une filière, les filaments étant ensuite rassemblés sous forme d'enroulement de fils de base de titre égal à 57 tex.

L'enroulement est ensuite séché à 130°C pendant 12 heures

Les fils de base sont extraits de l'enroulement et sont rassemblés en stratifils constitués de 42 fils de base, constituant un premier lot. Un deuxième lot de stratifils est obtenu par extraction des fils de base à partir de l'enroulement et application, sur la mèche assemblée, d'une solution aqueuse antistatique à 25 % en poids de chlorure de cocotriméthylammonium⁽⁸⁾ (pH ajusté à 4 par ajout d'acide formique ; taux déposé en sec : 0,06 %)..
(8) commercialisé sous la référence «Arquad® C35 par la société AKZO NOBEL CHEMICALS

Le fil déroulé à partir du stratifil est inséré dans un dispositif de coupe comprenant deux lames, une lame en acier dur et une lame en acier "tendre" à usure rapide (traitement thermique à 550°C), ainsi que des capteurs de force et de température. La coupe, effectuée à 20°C sous 40 % d'humidité relative, est réglée pour former des fils coupés de 25 mm de longueur. L'aptitude à la coupe est mesurée par la masse des fils de verre pouvant être coupés jusqu'à l'apparition de fil de longueur double (2×25 mm). A la masse de fils coupés obtenue avec les fils ayant subi l'étape supplémentaire de traitement antistatique, on attribue la valeur 1 qui sert ici de valeur de référence pour mesurer l'aptitude à la coupe. Avec les fils de verre non traités, l'aptitude à la coupe est égale à 0.7.

### EXEMPLE 2

On procède dans les conditions de l'exemple 1 modifié en ce que les silanes entrant dans la composition d'ensimage sont constitués de (en % en poids) :
- bis-silane : amino-bis(propyl-triméthoxysilane)⁽⁹⁾ 0,20
- monosilane insaturé : mélange de méthacryl-amide-propyltriméthoxysilane et de méthacryl-amide-propyl-triéthoxysilane ⁽¹⁰⁾ 0,25

(9) commercialisé sous la référence «Silquest® A-1170» par la société WITCO CORPORATION
(10) commercialisé sous la référence «Silquest® Y-5997» par la société CK WITCO CORPORATION

La mesure de l'aptitude à la coupe des fils revêtus et non revêtus de l'agent antistatique est égale à 4,5 et 1,5, respectivement.

### EXEMPLE 3

On procède dans les conditions de l'exemple 2 modifié en ce que la teneur en silanes ⁽⁹⁾ et ⁽¹⁰⁾ est égale à 0,16 et 0,20 % en poids, respectivement.

La mesure de l'aptitude à la coupe des fils revêtus de l'agent antistatique est égale à 4,5.

### EXEMPLE 4

On procède dans les conditions de l'exemple 2 modifié en ce que la teneur en silanes ⁽⁹⁾ et ⁽¹⁰⁾ est égale à 0,10 et 0,125 % en poids, respectivement.

La mesure de l'aptitude à la coupe des fils revêtus de l'agent antistatique est égale à 1,8.

### EXEMPLE 5

On procède dans les conditions de l'exemple 2 modifié en ce que la teneur en silanes ⁽⁹⁾ et ⁽¹⁰⁾ est égale à 0,15 et 0,25 % en poids, respectivement.

La mesure de l'aptitude à la coupe des fils revêtus et non revêtus de l'agent antistatique est égale à 1,3 et 0,6, respectivement.

### EXEMPLE 6

On prépare une composition d'ensimage comprenant (en % en poids) :
- bis-silane : amino-bis(propyl-triméthoxysilane) ⁽⁹⁾ 0,20
- monosilane insaturé : mélange de méthacryl-amide-propyltriméthoxysilane et de méthacryl-amide-propyl-triéthoxysilane ⁽¹⁰⁾ 0,20
- agent collant : polyuréthane aliphatique/cycloaliphatique⁽¹¹⁾ 4,10
- agent collant : copolymère acétate de vinyle-époxyde⁽¹²⁾ 7,70
- lubrifiant : amide de suif hydrogéné polyoxyéthyléné⁽¹³⁾ 0,14
- lubrifiant : polyéthylène imide à fonctions amide libres⁽⁷⁾ 0,02
- LiCl 0,10
- Eau qsp 100
- Acide formique qsp pour obtenir un pH égal à 5.

(11) commercialisé sous la référence «Neoxil® 9851 » par la société DSM ITALIA
(12) commercialisé sous la référence «Fulatex® 8022» par la société H. B. FULLER FRANCE
(13) commercialisé sous la référence «Ethomid® HT23» par la société AKZO CHEMICAL

L'extrait sec de la composition d'ensimage obtenue est égal à 5,85 %.

La mesure de l'aptitude à la coupe des fils non revêtus de l'agent antistatique est égale à 2,2.

### EXEMPLE 7

On procède dans les conditions de l'exemple 6 modifié en ce que la teneur en silane ⁽¹⁰⁾ est égale à 0,10 % en poids.

La mesure de l'aptitude à la coupe des fils non revêtus de l'agent antistatique est égale à 6,0.

### EXEMPLE 8

On procède dans les conditions de l'exemple 6 modifié en ce que la teneur de chacun des silanes ⁽⁹⁾ et ⁽¹⁰⁾ est égale à 0,17 % en poids.

La mesure de l'aptitude à la coupe des fils non revêtus de l'agent antistatique est égale à 2,5.

### EXEMPLE 9

On procède dans les conditions de l'exemple 6 modifié en ce que la teneur de chacun des silanes ⁽⁹⁾ et ⁽¹⁰⁾ est égale à 0,23 % en poids.

La mesure de l'aptitude à la coupe des fils non revêtus de l'agent antistatique est égale à 2,2.

### EXEMPLE 10

On procède dans les conditions de l'exemple 6 modifié en ce que la teneur en silanes ⁽⁹⁾ et ⁽¹⁰⁾ est égale à 0,17 et 0,23 % en poids, respectivement.

La mesure de l'aptitude à la coupe des fils non revêtus de l'agent antistatique est égale à 1,3.

### EXEMPLE 11

On procède dans les conditions de l'exemple 6 modifié en ce que la teneur en silanes ⁽⁹⁾ et ⁽¹⁰⁾ est égale à 0,23 et 0,17 % en poids, respectivement.

La mesure de l'aptitude à la coupe des fils non revêtus de l'agent antistatique est égale à 5,2.

### EXEMPLE 12

On procède dans les conditions de l'exemple 11 modifié en ce que l'on remplace l'agent collant ⁽¹²⁾ par 6,5 % en poids de copolymère éthylène-acétate de vinyle⁽¹⁴⁾.
(14) commercialisé sous la référence «Vinamul® 1367» par la société VINAMUL

La mesure de l'aptitude à la coupe des fils revêtus et non revêtus de l'agent antistatique est égale à 8,1 et 2,7, respectivement.

### EXEMPLE 13

On procède dans les conditions de l'exemple 11 modifié en ce que l'on remplace l'agent collant ⁽¹²⁾ par 8,7 % en poids de poly(acétate de vinyle)⁽¹⁵⁾.
(15) commercialisé sous la référence «Mowilith® D43» par la société HOECHST

La mesure de l'aptitude à la coupe des fils non revêtus de l'agent antistatique est égale à 5,0.

### EXEMPLE 14

On procède dans les conditions de l'exemple 13 modifié en ce que la teneur en agent collant ⁽¹¹⁾ est égale à 2,55 % en poids.

La mesure de l'aptitude à la coupe des fils revêtus et non revêtus de l'agent antistatique est égale à 3,5 et 2,3, respectivement.

### EXEMPLE 15

On procède dans les conditions de l'exemple 13 modifié en ce que la teneur en agent collant ⁽¹⁵⁾ est égale à 6,8 % en poids.

La mesure de l'aptitude à la coupe des fils non revêtus de l'agent antistatique est égale à 4,1.

### EXEMPLES 16 A 18

On évalue les propriétés du fil de verre revêtu de la composition d'ensimage dans les conditions suivantes :
- projection à sec
   On introduit le fil de verre extrait du stratifil dans un pistolet (Vénus de MATRASUR) qui permet de le couper et de le projeter à l'horizontale, sans ajout de résine. On apprécie ainsi la qualité du dévidage du fil et les propriétés des fils coupés : rigidité, défibrage et "montée en paquets".
- projection simultanée
   On procède dans les conditions du test à sec du paragraphe précédent, cette fois en présence de résine polyester insaturée orthophtalique (Norsodyne S 2010 V commercialisée par CRAY VALLEY) de viscosité égale à 5,6 Poises à 18°C, de réactivité moyenne et non thixotropée. La résine et les fils coupés sont projetés simultanément sur les parois d'un moule en forme d'escalier qui comporte une paroi verticale de 1 m de haut, puis une marche de 0,2 m de profondeur et de 0,2 m de hauteur et enfin une paroi horizontale de 1 m de long. On évalue l'aspect du tapis, la vitesse de mouillage, l'imprégnation finale ("à coeur") et la tenue en paroi verticale. La teneur en verre dans le composite final est de l'ordre de 30 %.
- propriétés mécaniques des composites
   On utilise le fil de verre pour former une plaque à fils parallèles selon la norme ISO 9291. Dans cette plaque, on découpe des éprouvettes sur lesquelles on mesure les contraintes à la rupture en flexion et en cisaillement dans les conditions des normes ISO 14125 et 14130, respectivement.

Les résultats correspondant aux fils de verre des exemples 1, 2 et 4 ayant subi l'étape de traitement par l'agent antistatique sont rassemblés dans le tableau 1 (exemples 16, 17 et 18 respectivement).

Dans ce tableau, les évaluations relatives à la projection à sec et à la projection simultanée sont définies selon l'échelle de valeurs suivantes : 1 = très mauvais, 2 = mauvais, 3 = assez bien, 4 = bien et 5 = très bien.

**Tableau 1**

| | **Ex. 16** **(comparatif)** | **Ex. 17** | **Ex. 18** |
|---|---|---|---|
| **Projection à sec** | | | |
| Rigidité | 4 | 4 | 3,5 |
| Défibrage | 3,5 | 4 | 4 |
| "montée en paquets" | 4,5 | 5 | 5 |

| **Projection simultanée** | | | |
|---|---|---|---|
| aspect du tapis | 4 | 3,5 | 3,5 |
| vitesse de mouillage | 3 | 2,5 | 3 |
| imprégnation finale | 4 | 4,5 | 5 |
| tenue en paroi verticale | 4 | 5 | 4,5 |

| **Plaque à fils parallèles** | | | |
|---|---|---|---|
| - contrainte à la rupture en flexion (MPa) | | | |
| initial | 2426 | 2588 | 2602 |
| après 24 heures | 1436 | 2201 | 2003 |
| perte (%) | 41 | 15 | 23 |
| - contrainte à la rupture en cisaillement (MPa) | | | |
| initial | 51 | 73 | 69 |
| après 24 heures | 31 | 55 | 43 |
| perte (%) | 40 | 25 | 38 |

A la lecture du tableau 1, on constate que les fils de verre des exemples 17 et 18 conformes à l'invention ont un comportement en projection, notamment à sec, similaire à celui des fils de l'art antérieur illustré par l'exemple 16. S'agissant plus particulièrement de la projection simultanée, on note qu'avec les fils selon l'invention on obtient même une amélioration de l'imprégnation finale et de la tenue en paroi verticale. Bien que présentant un niveau de performance plus faible, l'aspect du tapis et à la vitesse de mouillage restent dans des limites tout à fait satisfaisantes pour l'application visée.

Il convient de noter de surcroît que, de manière tout à fait inattendue, les composites incorporant les fils de verre selon l'invention présentent une résistance au vieillissement nettement améliorée. En effet, les mesures de contraintes en rupture en flexion et en cisaillement se traduisent par une perte (en %) inférieure à celle des composites de l'exemple comparatif, en particulier avec le composite utilisant les fils de l'exemple 17.

Les fils de verre revêtus de la composition d'ensimage qui associe le bis-silane (A) et le monosilane insaturé (B) sont donc remarquables en ce qu'ils possèdent une meilleure aptitude à la coupe, permettent une conservation des propriétés mécaniques de renforcement et un meilleur comportement dans les conditions de vieillissement, dans des conditions de mise en oeuvre conventionnelles.

## Revendications

1. Fil de verre revêtu d'une composition d'ensimage, **caractérisé en ce que** ladite composition comprend l'association
- d'au moins un bis-silane (A) de formule 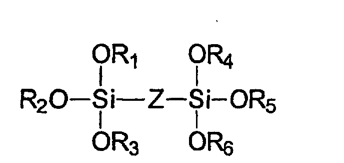 dans laquelle :
R₁, R₂, R₃, R₄, R₅ et R₆, identiques ou différents, représentent un radical alkyle en C₁- C₆, de préférence en C₁- C₃
Z représente une chaîne hydrocarbonée en C₁-C₁₆ contenant un ou plusieurs hétéroatomes N, O et/ou S, et Z ne contenant pas exclusivement O,
- et d'au moins un monosilane insaturé (B) choisi parmi les vinylsilanes et les (méth)acrylosilanes.

2. Fils de verre selon la revendication 1, **caractérisé en ce que** le bis-silane (A) répond à la formule 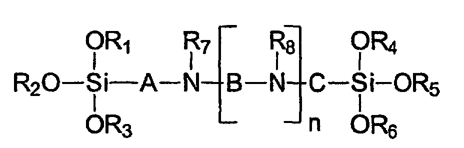 dans laquelle
R₁, R₂, R₃, R₄, R₅ et R₆ ont la signification donnée ci-avant,
A, B et C, identiques ou différents, représentent une chaîne hydrocarbonée en C₁-C₁₆, la somme des atomes de carbone de A, B et C étant inférieure ou égale à 16
n est égal à 0, 1, 2 ou 3
R₇ et R₈, identiques ou différents, représentent H ou un radical méthyle ou éthyle.

3. Fil de verre selon la revendication 2, **caractérisé en ce que** le bis-silane (A) répond à la formule précitée dans laquelle
R₁, R₂, R₃, R₄, R₅ et R₆, identiques, représentent un radical méthyle ou éthyle
A et C, identiques ou différents, représentent un radical méthylène, éthylène ou propylène
B représente un radical éthylène
n est égal à 0 ou 1
R₇ et R₈ représentent un atome d'hydrogène.

4. Fil de verre selon la revendication 3, **caractérisé en ce que** le bis-silane (A) répond à la formule précitée dans laquelle
R₁, R₂, R₃, R₄, R₅ et R₆, identiques, représentent un radical méthyle
A et C représentent un radical propylène
n est égal à 0
R₇ et R₈ représentent un atome d'hydrogène.

5. Fil de verre selon l'une des revendications 1 à 4, **caractérisé en ce que** le monosilane (B) est choisi parmi les (méth)acrylosilanes.

6. Fil de verre selon la revendication 5, **caractérisé en ce que** le monosilane (B) est choisi parmi les [(méth)acryloxyalkyl]trialkoxysilanes et les (méth)acrylamidealkyltrialkoxysilanes.

7. Fil de verre selon l'une des revendications 1 à 6, **caractérisé en ce que** le rapport pondéral bis-silane (A)/monosilane (B) est compris entre 0,1 et 6, de préférence 0,3 et 3.

8. Fil de verre selon l'une des revendications 1 à 7, **caractérisé en ce que** la composition d'ensimage comprend en outre au moins un agent de collage.

9. Fil de verre selon l'une des revendications 1 à 8, **caractérisé en ce que** la composition comprend en outre au moins un agent lubrifiant.

10. Fil de verre selon l'une des revendications 1 à 9, **caractérisé en ce qu'**il est constitué de filaments ayant un diamètre variant de 9 à 24 µm.

11. Fil de verre selon l'une des revendications 1 à 10, **caractérisé en ce qu'**il présente un titre compris entre 40 et 70 tex.

12. Fil de verre selon l'une des revendications 1 à 11, **caractérisé en ce qu'**il présente une perte au feu inférieure à 1,5 %, de préférence comprise entre 0,9 et 1,3 %.

13. Composition d'ensimage destinée à revêtir les fils de verre selon l'une des revendications 1 à 12, **caractérisée en ce qu'**elle comprend :
- au moins un bis-silane (A) répondant à la formule citée ci-avant
- au moins un monosilane (B)
- au moins un agent collant
- au moins un agent lubrifiant
- et de l'eau.

14. Composition selon la revendication 13, **caractérisée en ce qu'**elle comprend :
- 0,05 à 0,4 % en poids de bis-silane (A)
- 0,05 à 0,4 % en poids de monosilane (B)
- 3,9 à 6,8 % en poids d'agent collant
- 0,01 à 0,4 % en poids d'agent lubrifiant,
- et au moins 90 % d'eau.

15. Composition selon l'une des revendications 13 ou 14, **caractérisée en ce qu'**elle présente un extrait sec compris entre 2 et 10 % en poids, de préférence 4 et 8 %.

16. Composite comprenant au moins une matière polymère thermodurcissable et des fils de verre de renforcement, **caractérisé en ce que** tout ou partie des fils est constitué par des fils selon l'une des revendications 1 à 12.

17. Composite selon la revendication 16, **caractérisé en ce qu'**il renferme 20 à 40 % en poids de verre.

18. Composite selon l'une des revendications 16 ou 17, **caractérisé en ce que** la matière polymère est un polyester et/ou un époxy.

## Claims

1. Glass fibre coated with a sizing composition, **characterised in that** said composition comprises the association of
- at least one bis-silane (A) of the formula 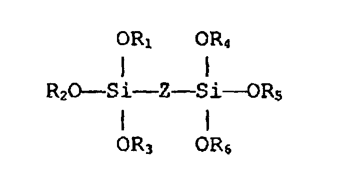 wherein R₁, R₂, R₃, R₄, R₅ and R₆, identical or different, represent a C₁-C₆, preferably C₁-C₃, alkyl radical
Z represents a C₁-C₁₆ hydrocarbon chain containing one or more heteroatoms N, O and/or S, and Z not containing exclusively O,
- and of at least one unsaturated monosilane (B) selected from the vinylsilanes and the (meth)acrylosilanes.

2. Glass fibre according to claim 1, **characterised in that** the bis-silane (A) corresponds to the formula 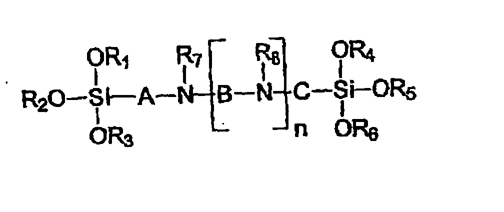 wherein
R₁, R₂, R₃, R₄, R₅ and R₆ have the meaning given above,
A, B and C, identical or different, represent a C₁-C₁₆ hydrocarbon chain, the sum of the carbon atoms of A, B and C being 16 or less than 16
n is 0, 1, 2 or 3
R₇ and R₈, identical or different, represent H or a methyl or ethyl radical.

3. Glass fibre according to claim 2, **characterised in that** the bis-silane (A) corresponds to the aforesaid formula wherein
R₁, R₂, R₃, R₄, R₅ and R₆, identical, represent a methyl or ethyl radical
A and C, identical or different, represent a methylene, ethylene or propylene radical
B represents an ethylene radical
n is 0 or 1
R₇ and R₈ represent a hydrogen atom.

4. Glass fibre according to claim 3, **characterised in that** the bis-silane (A) corresponds to the aforesaid formula wherein
R₁, R₂, R₃, R₄, R₅ and R₆, identical, represent a methyl radical
A and C represent a propylene radical
n is 0
R₇ and R₈ represent a hydrogen atom.

5. Glass fibre according to any one of claims 1 to 4, **characterised in that** the monosilane (B) is selected from the (meth)acrylosilanes.

6. Glass fibre according to claim 5, **characterised in that** the monosilane (B) is selected from the [(meth)acryloxyalkyl]trialkoxysilanes and the (meth)acrylamidealkyltrialkoxysilanes.

7. Glass fibre according to any one of claims 1 to 6, **characterised in that** the weight-by-weight ratio of bis-silane (A) to monosilane (B) is between 0.1 and 6, preferably between 0.3 and 3.

8. Glass fibre according to any one of claims 1 to 7, **characterised in that** the sizing composition further comprises at least one adhesive agent.

9. Glass fibre according to any one of claims 1 to 8, **characterised in that** the composition further comprises at least one lubricating agent.

10. Glass fibre according to any one of claims 1 to 9, **characterised in that** it is composed of filaments having a diameter varying from 9 to 24 pm.

11. Glass fibre according to any one of claims 1 to 10, **characterised in that** it has a count of between 40 and 70 tex.

12. Glass fibre according to any one of claims 1 to 11, **characterised in that** it has a melting loss of less than 1.5%, preferably of between 0.9 and 1.3%.

13. A sizing composition for coating the glass fibres according to any one of claims 1 to 12, **characterised in that** it comprises:
- at least one bis-silane (A) corresponding to the above-mentioned formula
- at least one monosilane (B)
- at least one adhesive agent
- at least one lubricating agent
- and water.

14. A composition according to claim 13, **characterised in that** it comprises:
- 0.05 to 0.4% by weight of bis-silane (A)
- 0.05 to 0.4% by weight of monosilane (B)
- 3.9 to 6.8% by weight of adhesive agent
- 0.01 to 0.4% by weight of lubricating agent,
- and at least 90% of water.

15. A composition according to claim 13 or claim 14, **characterised in that** it has a dry extract of between 2 and 10% by weight, preferably between 4 and 8%.

16. A composite comprising at least one thermosetting polymeric material and reinforcing glass fibres, **characterised in that** all or some of the fibres are composed of fibres according to any one of claims 1 to 12.

17. A composite according to claim 16, **characterised in that** it contains 20 to 40% by weight of glass.

18. A composite according to claim 16 or claim 17, **characterised in that** the polymeric material is a polyester and/or an epoxy.

## Patentansprüche

1. Glasfaden, der mit einer Schlichtezusammensetzung beschichtet ist, **dadurch gekennzeichnet, dass** diese die Vereinigung von
- mindestens einem Bisilan (A) mit der Formel 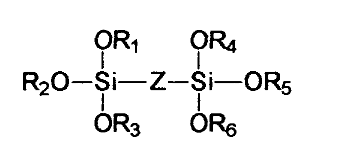 in welcher
· R₁, R₂, R₃, R₄, R₅ und R₆ gegebenenfalls voneinander verschieden sind und einen C₁- bis C₆- und vorzugsweise C₁- bis C₃-Alkylrest bedeuten, und
· Z eine C₁- bis C₁₆-Kohlenwasserstoffkette, die ein oder mehrere Heteroatome N, O und/oder S enthält, und Z nicht ausschließlich O enthält, bedeutet und
- mindestens einem ungesättigten Monosilan (B), das aus Vinylsilanen und (Meth-)Acrylsilanen ausgewählt ist,
umfasst.

2. Glasfäden nach Anspruch 1, **dadurch gekennzeichnet, dass** das Bisilan (A) die Formel 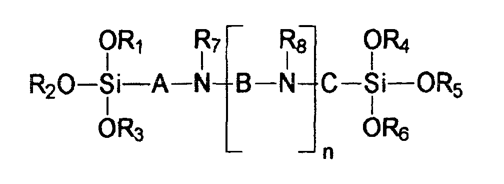 besitzt, in welcher
- R₁, R₂, R₃, R₄, R₅ und R₆ die zuvor angegebene Bedeutung haben und
- A, B und C gegebenenfalls voneinander verschieden sind und eine C₁- bis C₁₆-Kohlenwasserstoffkette bedeuten, wobei die Summe der Kohlenstoffatome von A, B und C kleiner als oder gleich 16 ist,
- n 0, 1, 2 oder 3 bedeutet und
- R₇ und R₈ gegebenenfalls voneinander verschieden sind und H oder einen Methyl- bzw. Ethylrest bedeuten.

3. Glasfaden nach Anspruch 2, **dadurch gekennzeichnet, dass** das Bisilan (A) die zuvor angegebene Formel besitzt, in welcher
- R₁, R₂, R₃, R₄, R₅ und R₆ gleich sind und einen Methyl- oder Ethylrest und
- A und C gegebenenfalls voneinander verschieden sind und einen Methylen-, Ethylen- oder Propylenrest bedeuten und
- B einen Ethylenrest und
- n 0 oder 1 bedeutet und
- R₇ und R₈ jeweils ein Wasserstoffatom bedeuten.

4. Glasfaden nach Anspruch 3, **dadurch gekennzeichnet, dass** das Bisilan (A) die zuvor angegebene Formel besitzt, in welcher
- R₁, R₂, R₃, R₄, R₅ und R₆ gleich sind und einen Methylrest und
- A und C einen Propylenrest bedeuten und
- n 0 bedeutet und
- R₇ und R₈ jeweils ein Wasserstoffatom bedeuten.

5. Glasfaden nach einem der Ansprüche 1 bis 4, **dadurch gekennzeichnet, dass** das Monosilan (B) aus (Meth-)Acrylsilanen ausgewählt ist.

6. Glasfaden nach Anspruch 5, **dadurch gekennzeichnet, dass** das Monosilan (B) aus [(Meth-)Acryloxyalkyl]trialkoxysilanen und (Meth-)Acrylamidalkyltrialkoxysilanen ausgewählt ist.

7. Glasfaden nach einem der Ansprüche 1 bis 6, **dadurch gekennzeichnet, dass** das Gewichtsverhältnis von Bisilan (A)/Monosilan (B) 0,1 bis 6 und vorzugsweise 0,3 bis 3 beträgt.

8. Glasfaden nach einem der Ansprüche 1 bis 7, **dadurch gekennzeichnet, dass** die Schlichtezusammensetzung außerdem mindestens einen Klebstoff enthält.

9. Glasfaden nach einem der Ansprüche 1 bis 8, **dadurch gekennzeichnet, dass** die Zusammensetzung darüber hinaus mindestens ein Gleitmittel enthält.

10. Glasfaden nach einem der Ansprüche 1 bis 9, **dadurch gekennzeichnet, dass** er aus Filamenten mit einem Durchmesser von 9 bis 24 µm besteht.

11. Glasfaden nach einem der Ansprüche 1 bis 10, **dadurch gekennzeichnet, dass** sein Titer 40 bis 70 tex beträgt.

12. Glasfaden nach einem der Ansprüche 1 bis 11, **dadurch gekennzeichnet, dass** sein Glühverlust weniger als 1,5 % und vorzugsweise 0,9 bis 1,3 % beträgt.

13. Schlichtezusammensetzung, die für die Beschichtung der Glasfäden nach einem der Ansprüche 1 bis 12 vorgesehen ist, **dadurch gekennzeichnet, dass** sie
- mindestens ein Bisilan (A) mit der weiter oben angegebenen Formel,
- mindestens ein Monosilan (B),
- mindestens einen Klebstoff,
- mindestens ein Gleitmittel und
- Wasser
umfasst.

14. Zusammensetzung nach Anspruch 13, **dadurch gekennzeichnet, dass** sie
- 0,05 bis 0,4 Gew.-% Bisilan (A),
- 0,05 bis 0,4 Gew.-% Monosilan (B),
- 3,9 bis 6,8 Gew.-% Klebstoff,
- 0,01 bis 0,4 Gew.-% Gleitmittel und
- mindestens 90 % Wasser
umfasst.

15. Zusammensetzung nach Anspruch 13 oder 14, **dadurch gekennzeichnet, dass** ihr Trockenextrakt 2 bis 10 Gew.-% und vorzugsweise 4 bis 8 Gew -% beträgt.

16. Verbundmaterial, das mindestens ein wärmeaushärtbares Polymer und Glasverstärkungsfäden umfasst, **dadurch gekennzeichnet, dass** sämtliche Fäden oder ein Teil davon aus Fäden nach einem der Ansprüche 1 bis 12 besteht/bestehen.

17. Verbundmaterial nach Anspruch 16, **dadurch gekennzeichnet, dass** es 20 bis 40 Gew -% Glas enthält.

18. Verbundmaterial nach Anspruch 16 oder 17, **dadurch gekennzeichnet, dass** das Polymer ein Polyester und/oder ein Epoxidharz ist.
